# EUROPÄISCHE PATENTSCHRIFT

(11) **EP 3 076 381 B1**
(45) Veröffentlichungstag und Bekanntmachung des Hinweises auf die Patenterteilung: **25.07.2018**
(21) Anmeldenummer: 15193310.8
(22) Anmeldetag: 05.11.2015
(51) Int. Cl.: G09F 13/16, C09D 5/28, C09J 7/00

(54) **HINWEISSCHILD MIT ANTIKLEBEFOLIE SOWIE VERFAHREN ZU DESSEN HERSTELLUNG**
ADVISORY DISPLAY BOARD WITH ANTI-ADHESIVE SHEET AND METHOD FOR THE PRODUCTION THEREOF
SIGNALISATION COMPRENANT UNE FEUILLE ANTI-ADHÉSIVE ET SON PROCÉDÉ DE FABRICATION

(30) Priorität: 30.03.2015 DE 102015104898
(43) Veröffentlichungstag der Anmeldung: 05.10.2016
(73) Patentinhaber: Fritz Lange GmbH, 31832 Springe (DE)
(72) Erfinder: Ilgay, Vedat, DE-30880 Rethen (DE)
(74) Vertreter: Griepenstroh, Jörg

(56) Entgegenhaltungen:
- EP-A2- 1 107 216
- WO-A1-2014/106922
- DE-A1- 3 544 072
- DE-A1- 10 116 158
- DE-A1-102010 024 559
- US-B1- 6 299 981

## Beschreibung

Die vorliegende Erfindung betrifft ein Hinweisschild gemäß den Merkmalen im Oberbegriff von Patentanspruch 1.

Die vorliegende Erfindung betrifft weiterhin ein Verfahren zur Herstellung eines Hinweisschildes gemäß den Merkmalen im Patentanspruch 14.

Die vorliegende Erfindung betrifft weiterhin ein Verfahren zur Nachrüstung eines Hinweisschildes gemäß den Merkmalen im Patentanspruch 15.

Aus dem Stand der Technik ist es bekannt, Hinweisschilder aufzustellen. Eine der bekanntesten Formen sind Verkehrshinweisschilder, die im Bereich von Straßen angebracht werden, um so den Verkehrsteilnehmern Angaben über Richtungen, Verkehrsregelungen oder sonstige Informationen zu vermitteln.

Ein zweiter Anwendungsfall sind Hinweisschilder die Informationen vermitteln. Beispielsweise auf Wanderwegen, in Museen oder aber auch in Sportstadien, um über Regeln aufzuklären, Informationen zu vermitteln oder Passanten den Weg zu weisen.

Solche Hinweisschilder nachfolgend auch Schilder genannt sind im täglichen Betrieb Fremdeinflüßen ausgesetzt. Zum einen betrifft dies die Verwitterung und Verschmutzung aufgrund von Umwelteinflüssen, wie insbesondere Niederschlag, Staubentwicklung sowie Smog. Zum anderen sind jedoch die Hinweisschilder der Fremdeinwirkung durch Dritte, insbesondere in Form von Verschmutzungen durch Graffiti sowie durch unerwünschtes Ankleben von Aufklebern ausgesetzt. Die Reinigung solcher Schilder, insbesondere die Reinigung von Graffiti und das Entfernen von Aufklebern sind nur mit hohem Aufwand und damit verbunden hohen Kosten zu bewerkstelligen, sofern überhaupt eine Entfernung möglich ist ohne Beschädigung des Schildes und hier insbesondere der Anzeigenflächen des Schildes selber.

Beispielsweise ist aus der DE 101 16 158 A1 ein Anzeigenschild bekannt, bei dem die Anzeigenseite mit einer Antihaftbeschichtung aus Kunststoffmaterial überzogen ist. Diese Antihaftschicht verhindert ein Anhaften von Schnee, Schmutz, Wasser und dergleichen, so dass die Gefahr vermieden wird, dass die Anzeigeninformationen durch solche Einwirkungen nicht mehr erkennbar sind. Ferner ist durch die Firma 3M™ ein Premium Protected Overlay Film Serie 1160 bekannt, welcher in Verbindung mit einem, ebenfalls hergestellt von 3M™ Graffiti-Farbenferner, ein leichtes Entfernen nach Auftragen mit einer Einwirkzeit von 1 bis 5 Min. von Stickern und Graffitis ermöglicht.

Aus der US 6 299 981 B1 ist das Aufbringen eines transparenten Substrates auf eine Glasscheibe bekannt, um eine hydrophobe oder hydrophile Funktion zu ermöglichen. Hierzu sind unregelmäßig verteilte Erhebungen und Vertiefungen in dem Substrat bereitzustellen. Diese Substratbeschichtung kann jedoch das Lichtdurchlässigkeitsverhalten negativ beeinflussen.

Weiterhin ist aus der EP 3 075 790 A2 eine Schutzlackierung mit Anti-Aufklebereffekt sowie ein Verfahren zum Aufbringen der Schutzlackierung bekannt, welche die gleiche Priorität zu dieser Schrift beansprucht.

Die Aufgabe der vorliegenden Erfindung ist es daher eine Möglichkeit aufzuzeigen, Hinweisschilder dahingehend zu schützen, dass insbesondere das Anhaften von Aufklebern erschwert sowie das generelle Reinigen erleichtert wird.

Die zuvor genannte Aufgabe wird bei dem erfindungsgemäßen Hinweisschild mit den Merkmalen im Patentanspruch 1 gelöst.

Ein verfahrenstechnischer Teil der Aufgabe wird weiterhin mit einem Verfahren zur Herstellung eines Hinweisschildes gemäß den Merkmalen im Patentanspruch 14 gelöst.

Ein weiterer verfahrenstechnischer Teil der Aufgabe wird mit einem Verfahren zur Nachrüstung eines Hinweisschildes mit den Merkmalen im Patentanspruch 15 gelöst.

Vorteilhafte Ausgestaltungsvarianten der vorliegenden Erfindung sind in den abhängigen Patentansprüchen beschrieben.

Die vorliegende Erfindung betrifft ein Hinweisschild, welches eine flächige Schildtafel mit mindestens einer Anzeigenseite aufweist, wobei auf der Anzeigenseite durch eine auf die Schildtafel aufgebrachte Anzeigenfolie ausgebildet ist. Auf der Anzeigenfolie ist eine Antihaftbeschichtung aufgebracht. Das Hinweisschild zeichnet sich erfindungsgemäß dadurch aus, dass die Antihaftbeschichtung als transparente Folie ausgebildet ist und eine Oberfläche mit unregelmäßig verteilten punktförmigen Erhebungen aufweist.

Bei dem Hinweisschild handelt es sich insbesondere um ein Verkehrsschild, besonders bevorzugt ein Verkehrszeichen gemäß StVO oder aber eine Werbetafel. Es kann sich jedoch auch um eine Informationstafel, beispielsweise in einem Museum handeln. Dieses weist eine Anzeigenseite auf, wobei die Anzeige selbst durch eine auf das Hinweisschild aufgeklebte Anzeigenfolie ausgebildet ist, welche insbesondere als retroreflektierende Folie und/oder mehrschichtige Folie ausgebildet ist. Die Anzeigenseite kann jedoch auch durch ein Bemalen und/oder Bedrucken bzw. Lackieren der Schildtafel ausgebildet sein, so dass entsprechend optische Hinweise und/oder Informationen auf der Anzeigenseite ersichtlich sind.

Über diese sich ergebende Oberseite der Anzeigenseite ist dann erfindungsgemäß die Antihaftbeschichtung in Form der transparenten Folien aufgebracht, was insbesondere durch Aufkleben erfolgt. An der zur Anzeigenseite hin gerichteten Seite der Folie ist diese eben bzw. glatt ausgebildet, so dass diese vollflächig an der Anzeigenseite anliegt. Auf der der Anzeigenseite gegenüberliegenden Seite, mithin der nach außen zum Betrachter des Hinweisschildes gerichteten Seite der Folie weist diese unregelmäßig verteilte punktförmige Erhebungen auf. Die Erhebungen stehen dabei gegenüber der Oberfläche über. Diese erfindungsgemäßen Erhebungen verhindern bei Aufkleben eines Stickers bzw. Aufklebers auf die Folie ein vollflächiges Anhaften der Klebeseite des Stickers auf der Folie selbst. In der Folge fällt der Sticker von selbst ab oder kann durch minimale ausschließlich mechanische Einwirkung entfernt werden. Unter mechanischer Einwirkung ist hier das Untergreifen des Stickers mit einem Fingernagel einer Reinigungskraft und Abziehen des Stickers zu verstehen und/oder beispielsweise das Abfegen des Stickers mit einer weichen Bürste. Nicht hingegen ist unter mechanischer Einwirkung im Sinne dieser Erfindung das mechanische Abschaben des Stickers mit einem Schaber, Messer oder sonstigem zu verstehen.

Gleichzeitig ist die Oberfläche der Folie der Antihaftbeschichtung derart ausgebildet, dass die bevorzugt einen selbstreinigenden Effekt gegenüber Smog, Niederschlag und sonstigen Umwelteinflüssen hat, welcher auch als Lotuseffekt bezeichnet werden kann. Durch auf die Folie auftretenden Regen und/oder das Reinigen mittels Wasser ist es möglich das Schild schnellstmöglich von Verschmutzungen durch Umwelteinflüsse zu reinigen. Bevorzugt ist die Oberfläche weiterhin so ausgebildet, dass das Farbaufbringen insbesondere durch Graffiti ebenfalls schnellstmöglich entfernt werden kann, insbesondere durch das Reinigen mit einem Hochdruckreiniger und/oder sanftem chemischen Reinigungsmitteln.

Die Schildtafel selbst kann dabei aus einem metallischen Werkstoff oder auch aus einem Kunststoff hergestellt sein. Sie kann jedoch auch beispielsweise aus Holz ausgebildet sein.

Bevorzugt ist die Anzeigenfolie auf die Schildtafel aufgebracht, insbesondere selbst durch einen Klebeprozess, wobei die Anzeigenfolie ganz besonders bevorzugt als retroreflektierende und insbesondere mehrschichtige bzw. mehrlagige Anzeigenfolie ausgebildet ist. In diesem Falle ist die Antihaftbeschichtung besonders bevorzugt einstückig mit der Anzeigenfolie verbunden mithin die oberste Lage der mehrlagigen Anzeigenfolie ist die transparente Folie mit unregelmäßig verteilten punktförmigen Erhebungen. Die Folie der Antihaftbeschichtung kann jedoch auch auf die Anzeigenfolie separat aufgeklebt sein, was insbesondere bei Nachrüstungen von bereits vorhandenen Hinweisschildern sowie Verkehrsschildern eine effektive Maßnahme darstellt.

Insbesondere wird als retroreflektierende Anzeigenfolie eine RA1 oder RA2 Folie nach DIN 67-520 verwendet.

Im Falle einer RA1 Folie werden die in der nachfolgenden Tabelle eingeblendeten Werte für den Mindestrückstrahlwert in der Einheit [(cd/(lx*m²)] verwendet.

| RA 1 Mindestrückstrahlwert [cd/(lx*m²)] | | | | | | | |
|---|---|---|---|---|---|---|---|
| Beobachtungswinkel α [°] | Anleuchtwinkel β [°] | Weiß | Gelb | Orange | Rot | Grün | Blau |
| 0,2 | 5 | 91 | 65 | 32,5 | 18,85 | 11,7 | 5,2 |
| 0,2 | 30 | 39 | 28,6 | 13 | 7,8 | 4,55 | 2,21 |
| 0,2 | 40 | 13 | 9,1 | 2,86 | 2,6 | 1,95 | 0,65 |
| 0,33 | 5 | 65 | 45,5 | 26 | 13 | 9,1 | 2,6 |
| 0,33 | 30 | 31,2 | 20,8 | 10,4 | 5,2 | 3,9 | 1,3 |
| 0,33 | 40 | 11,7 | 7,8 | 2,86 | 2,34 | 1,56 | 0,13 |
| 2,0 | 5 | 6,5 | 3,9 | 1,56 | 1,3 | 0,65 | 0,13 |
| 2,0 | 30 | 3,25 | 1,95 | 0,65 | 0,65 | 0,39 | 0,13 |
| 2,0 | 40 | 1,95 | 1,3 | 0,39 | 0,65 | 0,26 | 0,13 |

Im Falle der Verwendung einer RA2 Folie als Anzeigenfolie werden die in der nachfolgenden Tabelle eingeblendeten Werte für den Mindestrückstrahlwert verwendet.

| RA 2 Mindestrückstrahlwert [cd/(lx*m²)] | | | | | | | |
|---|---|---|---|---|---|---|---|
| Beobachtungswinkel α [°] | Anleuchtwinkel β [°] | Weiß | Gelb | Orange | Rot | Grün | Blau |
| 0,2 | 5 | 350 | 238 | 140 | 63 | 63 | 28 |
| 0,2 | 30 | 210 | 140 | 84 | 35 | 35 | 15,4 |
| 0,2 | 40 | 154 | 98 | 40,6 | 21 | 16,8 | 11,2 |
| 0,33 | 5 | 252 | 168 | 91 | 35 | 29,4 | 19,6 |
| 0,33 | 30 | 140 | 98 | 56 | 19,6 | 16,8 | 11,2 |
| 0,33 | 40 | 133 | 84 | 28 | 18,2 | 15,4 | 9,8 |
| 2,0 | 5 | 7 | 4,2 | 2,1 | 1,4 | 0,7 | 0,28 |
| 2,0 | 30 | 3,5 | 2,1 | 1,4 | 0,56 | 0,42 | 0,14 |
| 2,0 | 40 | 2,1 | 1,4 | 0,42 | 0,42 | 0,28 | 0,14 |

Die Erhebungen selbst weisen eine Größe von 10 µm bis 10.000 µm, insbesondere 50 µm bis 8.000 µm auf. Insbesondere stehen die Erhebungen mit einer Höhe größer 101 µm, insbesondere größer 201 µm gegenüber der Oberfläche über. Insbesondere jedoch mit einer Höhe kleiner 1000 µm, bevorzugt kleiner 750 µm und besonders bevorzugt kleiner 500 µm. Sie sind unregelmäßig, insbesondere stochastisch auf der Oberfläche verteilt. Die Erhebungen selbst weisen bevorzugt an ihrem maximal von der Oberfläche der Folie entferntesten Punkt eine abgerundete Spitze auf. Insbesondere erheben sich die Erhebungen vulkanartig oder aber kugelartig von der Oberfläche abstehend bzw. gegenüber dieser überstehend. Insbesondere sind die Erhebungen einstückig und werkstoffeinheitlich in der Folie ausgebildet. Die Erhebungen können dabei entweder alle eine gleiche Größe aufweisen, wobei Produktionsschwankungen hiervon unberührt sind. Auch können die Erhebungen voneinander verschiedene Größen aufweisen, mithin relativ kleinere und relativ größere Erhebungen gegenüber der Oberfläche der Folie der Antihaftbeschichtung überstehen.

Insbesondere ist die Folie der Antihaftbeschichtung als Kunststofffolie und bevorzugt auf einer Silikonbasis ausgebildet.

Um mit der erfindungsgemäßen Antihaftbeschichtung mit transparenter Folie ein Hinweisschild herzustellen, ist nachfolgendes Verfahren bei Erstproduktion anwendbar, welches sich erfindungsgemäß durch folgende Verfahrensschritte auszeichnet:
- Bereitstellen einer Schildtafel,
- Aufbringen einer Anzeigenfolie,
- Aufbringen einer Antihaftbeschichtung in Form einer Folie, wobei die Folie auf Ihrer Rückseite einen Klebefilm aufweist oder ein Klebefilm auf die Anzeigenfolie aufgebracht wird,
- Walzen oder Verpressen der Schildtafel mit der Anzeigenfolie und der Folie.

Insbesondere bietet dieses Verfahren den Vorteil, dass in eine bereits vorhandene Schildherstellung optional die Antihaftbeschichtung als Folie mit integriert werden kann. Somit können beispielsweise Schilder zunächst ohne Antihaftbeschichtung hergestellt werden, woraufhin dann je nach Anforderung ein oder mehrere Schilder mit einer Antihaftbeschichtung auf dem gleichen Herstellungswerkzeug in der gleichen Produktionslinie hergestellt werden können.

Weiterhin vorteilhaft an der vorliegenden Erfindung ist, dass sich bereits vorhandene Hinweisschilder, insbesondere Verkehrsschilder, nachrüsten lassen. Diese Nachrüstung kann entweder in einer Fabrik derart erfolgen, dass das vorhandene Hinweisschild demontiert wird, zur Fabrik verbracht wird und die Folie hier aufgebracht wird, was insbesondere für ein Verpressen oder Walzen vorteilig ist.

Es ist jedoch auch möglich, dass die Antihaftbeschichtung in Form der Folie an bereits vorhandenen Schildern vor Ort ohne Demontage aufgebracht wird. Hierzu werden insbesondere die Folien auf das Schild aufgebracht, insbesondere durch einen Laminierprozess, so dass Lufteinschlüsse möglichst vermieden werden. Dazu wird die Anzeigenseite des bereits vorhandenen Hinweisschildes gereinigt, insbesondere durch eine chemische Reinigung, um eine optimale Entfernung von Verschmutzungen und gleichzeitig ein optimales Anhaften der transparenten Folie zu erzeugen. Im Anschluss wird die Folie aufgeklebt, wobei die Folie hierzu entweder bereits selbst auf ihrer Rückseite einen Klebefilm aufweist oder aber auf die Anzeigenseite des Hinweisschildes wird ein Klebstoff aufgetragen, beispielsweise mit einem Sprühprozess.

Die Folie ist dabei lichtdurchlässig und verhindert insbesondere bei Verkehrsschildern die Retroreflektionseigenschaften nicht. Somit kann der optische Hinweis und/oder die Schrift auf dem Hinweisschild auch nach Aufbringen der Antihaftbeschichtung mit Folie zweifelsfrei aufgrund der Transparenz entziffert werden und aufgrund der Lichtdurchlässigkeit ist die Retroreflektionseigenschaft des Schildes, insbesondere bei Warnschildern oder Verkehrsschildern nicht gefährdet.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung. Es zeigen:
- Figur 1a und b: eine erfindungsgemäße Folie für eine Antihaftbeschichtung in Draufsicht,
- Figur 2: eine Querschnittsansicht durch eine erfindungsgemäße Folie für eine Antihaftbeschichtung,
- Figur 3: ein Hinweisschild als Verkehrsschild in Frontansicht und
- Figur 4: das Verkehrsschild in Seitenansicht.

In den Figuren werden für gleiche oder ähnliche Bauteile dieselben Bezugszeichen verwendet, auch wenn eine wiederholte Beschreibung aus Vereinfachungsgründen entfällt.

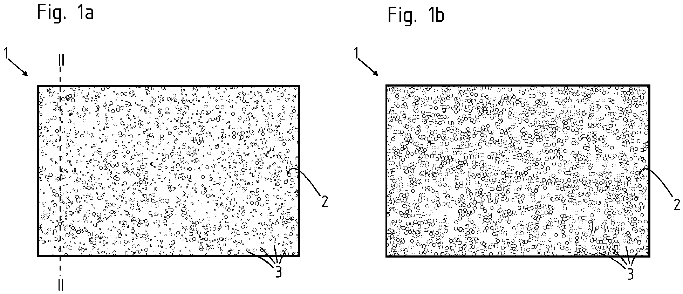

Figuren 1a und b zeigen jeweils eine erfindungsgemäße Folie 1 zur Ausbildung einer Antihaftbeschichtung. Bei Figur 1a weisen die Erhebungen 3 voneinander verschiedene Durchmesser 16 auf. Bei Figur 1b weisen alle Erhebungen 3 den gleichen Durchmesser 16 auf, wobei Produktionsverfahren hiervon unberührt sind. Die Erhebungen 3 sind jeweils unregelmäßig auf der Oberfläche der Folie verteilt angeordnet.

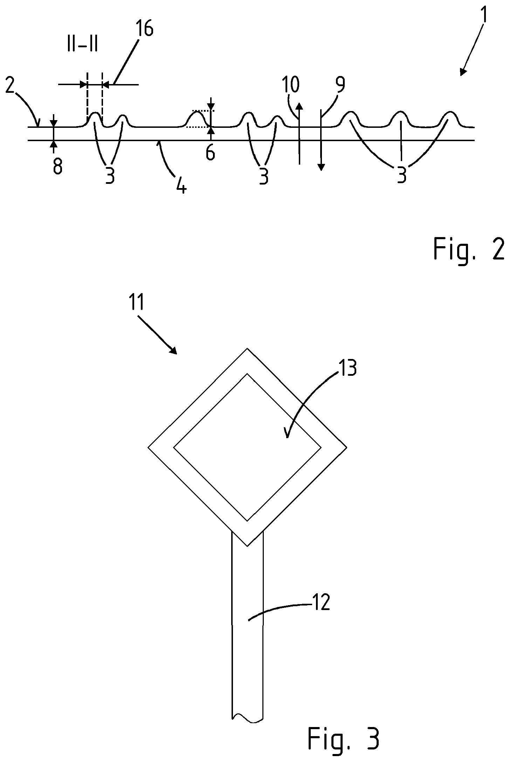

Die Folie 1 weist dazu eine Oberfläche 2 auf, wobei gegenüber der Oberfläche 2 eine Vielzahl von punktförmigen Erhebungen 3 gegenüber der Oberfläche 2 überstehen bzw. abstehen. Die Erhebungen 3 sind dabei unregelmäßig verteilt bzw. stochastisch verteilt auf der Oberfläche 2 angeordnet. Auf der Rückseite 4 der Folie 1, gut ersichtlich in Figur 2, ist diese hingegen glatt ausgebildet, so dass sie bei Aufbringen auf ein in Figur 3 dargestelltes Hinweisschild bzw. Verkehrsschild 11 vollflächig anliegt. Die Erhebungen 3 selbst weisen eine Höhe 6 mit der sie gegenüber der Oberfläche 2 überstehen, auf, die bevorzugt zwischen 10 und 10.000 µm und insbesondere größer 101 µm ist. Die Erhebungen 3 sind selbst in ihrer Höhe nicht einheitlich, so dass Erhebungen angeordnet sind, die höher sind gegenüber benachbarten oder umliegenden Erhebungen. Alle Erhebungen 3 können jedoch auch im Wesentlichen die gleiche Höhe 6 aufweisen, mit der sie gegenüber der Oberfläche 2 überstehen. Die Durchmesser 16 einer jeden Erhebung können gleich sein, jedoch auch voneinander verschieden. Insbesondere bei voneinander verschiedenen Höhen 6 der Erhebungen sind verschiedene Durchmesser 16 vorteilhaft.

Die Oberflächenbeschaffenheit der Oberfläche 2 der Folie 1 selbst hingegen weist insbesondere eine hohe Glätte auf, so dass Verschmutzungen in Form von Staub oder Smogeinwirkungen aber auch Farbeinwirkungen aufgrund von Graffiti leicht abwaschbar sind. Diese Oberflächenqualität ist dann auch auf der Oberfläche 2 der Erhebungen 3 ausgebildet. Die Folie 1 selbst weist eine Dicke 8 auf, die zwischen 0,1 mm und 3 mm, insbesondere zwischen 0,5 mm und 2 mm ausgebildet ist, wobei zu der Dicke 8 die Höhe 6 der Erhebung 3 hinzugerechnet wird. Die Folie 1 selbst ist lichtdurchlässig, insbesondere beidseitig lichtdurchlässig, so dass eintretende Lichtstrahlen 9 durch diese hindurchtreten können als auch aus der Oberfläche 2 austretende Lichtstrahlen 10 aus der Folie 1 heraustreten können.

Dargestellt in Figur 3 ist ein Verkehrsschild 11 in Form eines im deutschen Straßenverkehr bekannten Vorfahrtsschildes. Dieses Verkehrsschild 11 ist an einem Mast 12 befestigt und weist eine zum Betrachter hin gerichtete Anzeigenseite 13 auf.

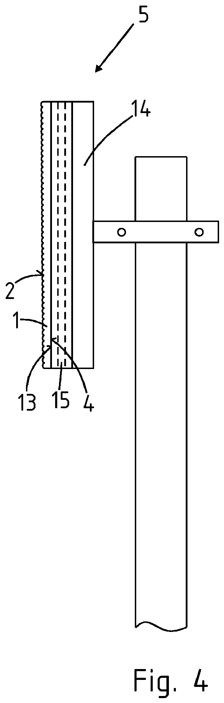

Gut dargestellt ist dies in Figur 4, wonach ein Hinweisschild 5, welches auch das Verkehrsschild aus Figur 3 sein kann, aus einer flächigen Schildtafel 14 mit darauf angeordneter mehrlagiger Anzeigenfolie 15 ausgebildet ist. Die Anzeigenfolie 15 ist dabei auf die Schildtafel 14 bevorzugt aufgeklebt. Insbesondere handelt es sich um eine mehrlagige retroreflektierende Folie 1. Diese Folie 1 weist eine Anzeigenseite 13 auf, wobei auf die Anzeigenseite 13 erfindungsgemäß die Folie 1 zur Ausbildung einer Antihaftbeschichtung mit ihrer Rückseite 4 aufgeklebt ist. Somit stehen die Erhebungen 3 zu einer Sichtseite hin über und ein vermeintlich aufgebrachter Sticker oder Aufkleber auf die Oberfläche 2 bzw. die Erhebungen 3 der Oberfläche 2 fällt entweder von selbst ab oder kann dadurch besonders einfach entfernt werden. Insbesondere eignet sich dieser Aufbau zur Nachrüstung an bereits vorhandenen Hinweisschildern 5. Dabei ist dieses nicht auf Verkehrsschilder begrenzt, sondern kann auch an sonstigen Informationstafeln, Anzeigenschildern oder ähnlichen angebracht werden.

### Bezugszeichen:

1 - Folie
2 - Oberfläche zu 1
3 - Erhebung
4 - Rückseite
5 - Hinweisschild
6 - Höhe
7 - Oberfläche zu 3
8 - Dicke zu 1
9 - eintretende Lichtstrahlen
10 - austretende Lichtstrahlen
11 - Verkehrsschild
12 - Mast
13 - Anzeigenseite
14 - Schildtafel
15 - Anzeigenfolie
16 - Durchmesser

## Patentansprüche

1. Hinweisschild (5), welches eine flächige Schildtafel (14) mit mindestens einer Anzeigenseite (13) aufweist, wobei die Anzeigenseite (13) durch eine auf die Schildtafel (14) aufgebrachte Anzeigenfolie (15) ausgebildet ist, **dadurch gekennzeichnet, dass** auf der Anzeigenseite (13) eine Antihaftbeschichtung aufgebracht ist, wobei die Antihaftbeschichtung als transparente Folie (1) ausgebildet ist, welche eine Oberfläche (2) mit unregelmäßig verteilten, punktförmigen Erhebungen (3) aufweist.

2. Hinweisschild nach Anspruch 1, **dadurch gekennzeichnet, dass** es als Verkehrsschild (11) oder als Werbetafel ausgebildet ist.

3. Hinweisschild nach Anspruch 1 oder 2, **dadurch gekennzeichnet, dass** die Folie (1) als Kunststofffolie ausgebildet ist.

4. Hinweisschild nach einem der Ansprüche 1 bis 3, **dadurch gekennzeichnet, dass** die Folie (1) auf die Anzeigenseite (13) aufgeklebt ist.

5. Hinweisschild nach einem der Ansprüche 1 bis 4, **dadurch gekennzeichnet, dass** die Schildtafel (14) aus einem metallischen Werkstoff oder aus einem Kunststoff ausgebildet ist.

6. Hinweisschild nach einem der Ansprüche 1 bis 5, **dadurch gekennzeichnet, dass** die Anzeigenfolie (15) eine retroreflektierende Anzeigenfolie (15) ist.

7. Hinweisschild nach einem der Ansprüche 1 bis 6, **dadurch gekennzeichnet, dass** die Antihaftbeschichtung einstückig mit der Anzeigenfolie (15) verbunden ist oder dass die Folie der Antihaftbeschichtung auf die Anzeigenfolie (15) aufgeklebt ist.

8. Hinweisschild nach einem der Ansprüche 1 bis 7, **dadurch gekennzeichnet, dass** die Erhebungen (3) eine Größe von 10µm bis 10.000µm aufweisen.

9. Hinweisschild nach einem der Ansprüche 1 bis 7, **dadurch gekennzeichnet, dass** die Erhebungen (3) eine Größe von 50µm bis 8000µm aufweisen.

10. Hinweisschild nach einem der Ansprüche 1 bis 7, **dadurch gekennzeichnet, dass** die Erhebungen (3) eine Größe größer 101 µm aufweisen.

11. Hinweisschild nach einem der Ansprüche 1 bis 7, **dadurch gekennzeichnet, dass** die Erhebungen (3) eine Größe größer 201 µm aufweisen.

12. Hinweisschild nach einem der Ansprüche 1 bis 11, **dadurch gekennzeichnet, dass** die Erhebungen (3) eine Größe kleiner 1000 µm aufweisen.

13. Hinweisschild nach einem der Ansprüche 1 bis 12, **dadurch gekennzeichnet, dass** die Erhebungen (3) eine abgerundete Spitze aufweisen.

14. Verfahren zur Herstellung eines Hinweisschildes (5) nach Patentanspruch 1, **gekennzeichnet, durch** folgende Verfahrensschritte:
- Bereitstellen einer Schildtafel (14),
- Aufbringen einer Anzeigenfolie (15),
- Aufbringen einer Antihaftbeschichtung in Form einer Folie (1), wobei die Folie (1) auf Ihrer Rückseite (4) einen Klebefilm aufweist oder ein Klebefilm auf die Anzeigenfolie (15) aufgebracht wird,
- Walzen oder Verpressen der Schildtafel (14) mit der Anzeigenfolie (15) und der Folie (1).

15. Verfahren zur Nachrüstung eines Hinweisschildes (5) nach Patentanspruch 1, **dadurch gekennzeichnet, dass** die Anzeigenseite (13) gereinigt wird und auf die Anzeigenseite (13) die Antihaftbeschichtung als Folie (1) aufgeklebt wird, wobei die Folie (1) auf Ihrer Rückseite (4) einen Klebefilm aufweist oder auf die Anzeigenseite (13) ein Klebstoff aufgetragen wird.

## Claims

1. Advisory display board (5), which has a planar sign panel (14) with at least one advertising side (13), wherein the advertising side (13) is formed by an advertising film (15) applied to the sign panel (14), **characterised in that** on the advertising side (13) an anti-adhesive coating is applied, wherein the anti-adhesive coating is formed as a transparent film (1), which has a surface (2) with irregularly distributed, punctual elevations (3).

2. Advisory display board according to claim 1, **characterised in that** it is formed as a traffic sign (11) or as an advertising board.

3. Advisory display board according to claim 1 or 2, **characterised in that** the film (1) is formed as a plastic film.

4. Advisory display board according to one of claims 1 to 3, **characterised in that** the film (1) is adhesively bonded with the advertising side (13).

5. Advisory display board according to one of claims 1 to 4, **characterised in that** the sign panel (14) is formed from a metallic material or from a plastic.

6. Advisory display board according to one of claims 1 to 5, **characterised in that** the advertising film (15) is a retroreflective advertising film (15).

7. Advisory display board according to one of claims 1 to 6, **characterised in that** the anti-adhesive coating is integrally bonded with the advertising film (15) of that the film of the anti-adhesive coating is adhesively bonded with the advertising film (15).

8. Advisory display board according to one of claims 1 to 7, **characterised in that** the elevations (3) have a size of 10µm to 10,000µm.

9. Advisory display board according to one of claims 1 to 7, **characterised in that** the elevations (3) have a size of 50µm to 8000µm.

10. Advisory display board according to one of claims 1 to 7, **characterised in that** the elevations (3) have a size larger than 101µm.

11. Advisory display board according to one of claims 1 to 7, **characterised in that** the elevations (3) have a size larger than 201µm.

12. Advisory display board according to one of claims 1 to 11, **characterised in that** the elevations (3) have a size smaller than 1000µm.

13. Advisory display board according to one of claims 1 to 12, **characterised in that** the elevations (3) have a rounded tip.

14. Method for producing an advisory display board (5) according to claim 1, **characterised by** the following method steps:
- provision of a sign panel (14),
- application of an advertising film (15),
- application of an anti-adhesive coating in the form of a film (1), wherein the film (1) has on its reverse side (4) an adhesive film, or an adhesive film is applied to the advertising film (15),
- rolling or pressing of the sign panel (14) with the advertising film (15) and the film (1).

15. Method for retrofitting an advisory display board (5) according to claim 1, **characterised in that** the advertising side (13) is cleaned and the anti-adhesive coating is adhesively bonded as a film (1) onto the advertising side (13), wherein the film (1) has on its reverse side (4) an adhesive film or an adhesive is applied to the advertising side (13).

## Revendications

1. Panneau de signalisation (5), qui comporte une plaque de panneau plane (14) avec au moins un côté d'affichage (13), le côté d'affichage (13) étant formé par une feuille d'affichage (15) appliquée sur la plaque de panneau (14), **caractérisé en ce qu'**un revêtement antiadhérent est appliqué sur le côté d'affichage (13), lequel revêtement antiadhérent est conçu comme une feuille transparente (1) qui présente une surface (2) avec des bosses (3) ponctuelles irrégulièrement réparties.

2. Panneau de signalisation selon la revendication 1, **caractérisé en ce qu'**il est conçu comme un panneau de signalisation routière (11) ou comme un panneau publicitaire.

3. Panneau de signalisation selon la revendication 1 ou 2, **caractérisé en ce que** la feuille (1) est conçue comme une feuille plastique.

4. Panneau de signalisation selon l'une des revendications 1 à 3, **caractérisé en ce que** la feuille (1) est collée sur le côté d'affichage (13).

5. Panneau de signalisation selon l'une des revendications 1 à 4, **caractérisé en ce que** la plaque de panneau (14) est en un matériau métallique ou en plastique.

6. Panneau de signalisation selon l'une des revendications 1 à 5, **caractérisé en ce que** la feuille d'affichage (15) est une feuille d'affichage (15) rétroréfléchissante.

7. Panneau de signalisation selon l'une des revendications 1 à 6, **caractérisé en ce que** le revêtement antiadhérent est lié d'un seul tenant à la feuille d'affichage (15) ou **en ce que** la feuille du revêtement antiadhérent est collée sur la feuille d'affichage (15).

8. Panneau de signalisation selon l'une des revendications 1 à 7, **caractérisé en ce que** les bosses (3) ont une dimension de 10 µm à 10 000 µm.

9. Panneau de signalisation selon l'une des revendications 1 à 7, **caractérisé en ce que** les bosses (3) ont une dimension de 50 µm à 8 000 µm.

10. Panneau de signalisation selon l'une des revendications 1 à 7, **caractérisé en ce que** les bosses (3) ont une dimension supérieure à 101 µm.

11. Panneau de signalisation selon l'une des revendications 1 à 7, **caractérisé en ce que** les bosses (3) ont une dimension supérieure à 201 µm.

12. Panneau de signalisation selon l'une des revendications 1 à 11, **caractérisé en ce que** les bosses (3) ont une dimension inférieure à 1 000 µm.

13. Panneau de signalisation selon l'une des revendications 1 à 12, **caractérisé en ce que** les bosses (3) ont un sommet arrondi.

14. Procédé de fabrication d'un panneau de signalisation (5) selon la revendication 1, **caractérisé par** les étapes de procédé suivantes :
- préparation d'une plaque de panneau (14),
- application d'une feuille d'affichage (15),
- application d'un revêtement antiadhérent sous la forme d'une feuille (1), la feuille (1) comportant sur sa face arrière (4) un film collant ou un film collant étant appliqué sur la feuille d'affichage (15),
- laminage ou compactage de la plaque de panneau (14) avec la feuille d'affichage (15) et la feuille (1).

15. Procédé d'équipement ultérieur d'un panneau de signalisation (5) selon la revendication 1, **caractérisé en ce que** le côté d'affichage (13) est nettoyé et le revêtement antiadhérent est collé sous forme de feuille (1) sur le côté d'affichage (13), la feuille (1) comportant sur sa face arrière (4) un film collant ou une colle étant appliquée sur le côté d'affichage (13).
